# EUROPEAN PATENT APPLICATION

(11) **EP 3 025 829 A1**
(43) Date of publication of application: **01.06.2016**
(21) Application number: 15163476.3
(22) Date of filing: 14.04.2015
(51) Int. Cl.: B25J 15/00, B25J 15/06, B25J 19/02

(54) **ARTICULATED ROBOT HAVING WEIGHT MEASURING APPARATUS**

(30) Priority: 25.11.2014 KR 20140164975
(71) Applicant: Yudostar Co., Ltd., Incheon 405-817 (KR)
(72) Inventor: Song, Chang Dong, 406-743 Yeonsu-gu, Incheon (KR); Park, Jeong Ho, 422-761 Bucheon-si, Gyeonggi-do (KR)
(74) Representative: Dr. Weitzel & Partner

(57) **Abstract**

Provided is an articulated robot that is configured to measure a weight of a molded product on absorbing the molded product by providing a weight sensor in an absorption apparatus formed on a robot arm of the articulated robot, so as to improve performances of the articulated robot, reduce operating processes, and improve productivity and efficiency. A robot transfer apparatus is provided on a front edge portion of a robot arm in the articulated robot, and the robot transfer apparatus includes the absorption apparatus having absorption tools and the weight measuring apparatus provided on the absorption apparatus. The weight measuring apparatus includes a frame connected to the robot arm; an installation plate formed on the frame; and load cells provided on the installation plate, wherein the load cells are configured to measure a weight of the absorption apparatus when the absorption apparatus is placed on the load cells.

## Description

### CROSS-REFERENCE TO RELATED PATENT APPLICATIONS

This application claims the benefit of Korean Patent Application No. 10-2015-0164975 filed on November 25, 2014, in the Korean Patent Office, the disclosure of which is incorporated herein in its entirety by reference.

### BACKGROUND OF THE INVENTION

### 1. Field of the Invention

The present invention relates to an articulated robot having a weight measuring apparatus, and in particular, to an articulated robot having a weight measuring apparatus provided on an arm of the articulated robot for measuring a weight of a molded product when the molded product that is molded in an injection mold is extracted by using the articulated robot.

### 2. Description of the Related Art

Patent reference 1 discloses an articulated robot structure that is used as various usages in automation equipment, and the articulated robot performs various functions according to control programs input therein. For example, an articulated welding robot disclosed in Patent reference 2 executes a welding operation.

According to embodiments of the present invention, an articulated robot as described in the above examples, in particular, an articulated robot apparatus for extracting a molded product measures a weight of an extracted molded product to determine whether the molded product is defective.

One of methods of determining whether a molded product is defective in an industry of injection molds is to measure a weight of the molded product to determine whether the molded product is defective or not. In this case, an electronic scale may be provided around an injection mold so that a human being places a molded product on the electronic scale by hands or by using a machine or a robot places the molded product on the electronic scale. Then, it is determined whether the molded product is defective or not according to a weight difference measured by using the electronic scale. However, the above method needs a large work space for ensuring an installation space of the electronic scale and ensuring a moving passage, and equipment costs increase. In addition, it is difficult to provide the electronic scale in a narrow space.

To address the above problem, an apparatus for measuring weight by using a robot has been developed.

However, a molded product formed in an injection mold is separately moved and placed horizontally, and then, is moved to a transfer device, for example, a conveyor to measure a weight thereof on the conveyor. Then, if the weight of the molded product is different from a predetermined standard weight, the molded product is sensed as a defective product. Accordingly, since the molded product has to be moved, placed horizontally, and weighed on the conveyor, it takes a lot of time to perform the above processes, and production speed of the products is also reduced.

### 3. Prior Art Reference

(Patent Reference 1) Korean Registered Patent No. 10-161,829 (August 26, 1998)
(Patent Reference 2) Korean Registered Patent No. 10-107,176 (November 5, 1996)

### SUMMARY OF THE INVENTION

The present invention provides an articulated robot capable of measuring a weight of a molded product in advance when absorbing the molded product or before transferring the molded product to a conveyor by installing a weight sensor in an absorbing device provided on a robot arm of the articulated robot, and accordingly, performances of the articulated robot may be improved, operating processes may be reduced, and productivity may be improved greatly.

According to an aspect of the present invention, there is provided an articulated robot including an absorption apparatus and a weight measuring apparatus, wherein a robot transfer apparatus is provided on a front edge portion of a robot arm in the articulated robot, and the robot transfer apparatus includes the absorption apparatus having absorption tools and the weight measuring apparatus provided on the absorption apparatus. The absorption apparatus may include: the absorption tools for absorbing an absorption target that is wanted to be moved; a support bar connected to the absorption tools; and an absorption crossbar connected to the support bar. The weight measuring apparatus may include: a frame connected to the robot arm; an installation plate formed on the frame; and load cells provided on the installation plate. The load cells may be configured to measure a weight of the absorption apparatus when the absorption apparatus is placed on the load cells. The absorption apparatus may further include a temperature sensor transfer apparatus for measuring a temperature of the absorption target. The temperature sensor transfer apparatus may include: the crossbar connected to the absorption apparatus; a forward and backward shaft connected to the crossbar; a bracket connected to the forward and backward shaft; and a temperature sensor connected to the bracket. One of a mold or a molded product may be absorbed by the absorption tools.

### BRIEF DESCRIPTION OF THE DRAWINGS

The above and other features and advantages of the present invention will become more apparent by describing in detail exemplary embodiments thereof with reference to the attached drawings in which:
FIG. 1 is a diagram showing an exemplary partial structure of an absorption apparatus according to an embodiment of the invention;
FIG. 2 is a diagram showing measuring a weight of a molded product according to an embodiment of the invention;
FIGS. 3 and 4 are diagrams of an absorption tool before and after being rotated;
FIG. 5 is a cross-sectional view of the absorption apparatus of FIG. 1;
FIG. 6 is a diagram showing adjusting a location of a temperature sensor;
FIG. 7 is a diagram illustrating an installation of a contact-type temperature sensor; and
FIG. 8 is a diagram showing an installation of a robot transfer apparatus provided on the articulated robot according to an embodiment of the invention.

### DETAILED DESCRIPTION OF THE INVENTION

Hereinafter, embodiments of the present invention will be described in detail with reference to accompanying drawings.

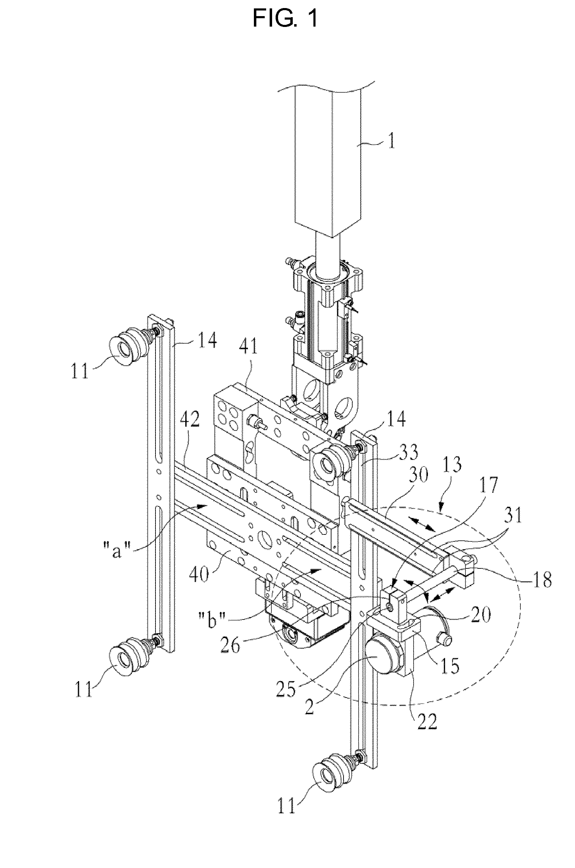

FIG. 1 is a diagram a molded product absorption apparatus connected to a robot arm 1. A weight of a molded product may be measured in a state where the molded product is absorbed by absorption tools 11.

As shown in FIG. 1, a frame 41 formed as a square frame is provided on a lower end of the robot arm 1, and an installation plate 40 is formed on the frame 41.

An absorption crossbar 42 is provided on the installation plate 40 in a horizontal direction, and support bars 14 are provided on opposite ends of the absorption crossbar 42 in a vertical direction. In addition, the absorption tools 11 are formed on upper and lower ends of the support bars 14 so as to separate a molded product in an injection mold from the injection mold by absorbing the molded product.

In addition, load cells (not shown) for measuring weight are formed between the installation plate 40 and the absorption crossbar 42. The load cells may be provided at two or more points of left and right sides of the installation plate 40 or the absorption crossbar 42. In FIG. 1, the load cells may be provided on points denoted as "a" and "b". That is, the load cells are provided on the installation plate 40 so that the absorption crossbar 42 is placed on the load cells and weight of the absorption crossbar 42 and entire elements connected to the absorption crossbar 42 may be measured.

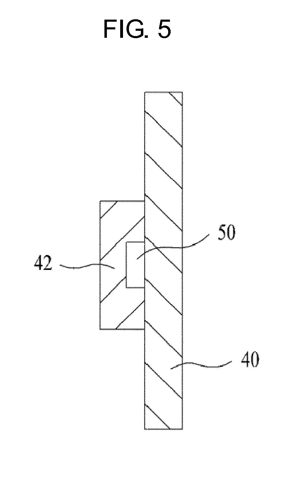

FIG. 5 is a cross-sectional view showing a load cell 50 provided on the installation plate 40.

As shown in FIG. 5, the load cell 50 is provided on the installation plate 40 and the absorption crossbar 42 is placed on the load cell 50, so that a total weight of the absorption crossbar 42, elements connected to the absorption crossbar 42, and a molded product absorbed by the absorption tools 11 may be measured.

If the load cell 50 is provided only on one point, a centroid of the molded product that is to be weighed is deviated to a side, and thus, it is difficult to measure the weight exactly. Therefore, the load cell 50 may be provided on two or more points at left and right sides of the installation plate 40. Since the load cell 50 measures a weight loaded on the absorption crossbar 42, the weight of the absorption crossbar 42 includes the weight of the molded product absorbed by the absorption tools 11. Therefore, if the weight of the molded product exceeds a predetermined standard weight deviation that is set in advance, the molded product is determined to be defective.

The weight of the molded product may vary when pinholes or blowholes generate in the molded product or there is a defect in injection or flow of a resin molded product, and thus, the variation in the weight is sensed to determine a defective molded product.

Locations where the load cells 50 are provided are exemplary, and the load cells 50 may be provided on other locations than the above examples. For example, the load cells 50 may be provided between the installation plate 40 and the frame 41 or between the frame 41 and a connecting portion of the robot arm 1.

In addition, a robot transfer apparatus 10 on which an infrared thermameter is mounted will be described below with reference to FIG. 1.

The temperature sensor is mounted on the robot transfer apparatus 10 in order to measure a temperature of a molded product formed in an injection mold or a mold, and if the measured temperature of the molded product or the mold exceeds a standard deviation, the molded product is determined to be defective and is separately transferred to a defect processing line by the robot transfer apparatus 10.

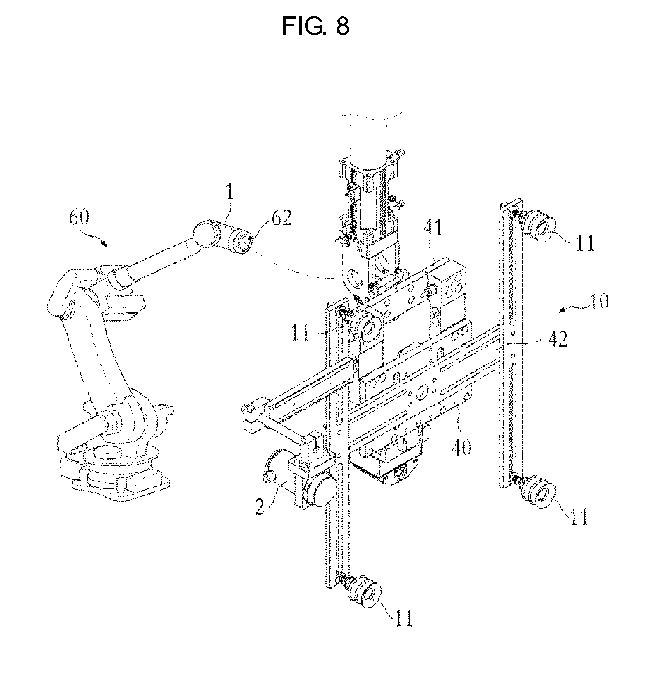

As shown in the drawing (FIG. 8), the absorption tools 11 are formed on, for example, four locations of the robot transfer apparatus 10 so as to absorb the injection mold or the molded product formed in the injection mold. In addition, in a state of absorbing the injection mold or the molded product, a location of a temperature sensor transfer apparatus 13, in which an infrared thermometer 2 is mounted, is adjusted to focus an infrared laser beam. A laser point may be focused by rotating the infrared thermometer 2 to left and right sides, or moving the infrared thermometer 2 back and forth, up and down, and in a horizontal direction.

The rotation of the infrared thermometer 2 in the left and right directions may be adjusted by an adjusting tool 15 formed on a bracket 17. An arc-shaped recess 20 formed as an arc is formed in the adjusting tool 15, and a coupling plate 22 for fixing the temperature sensor 2 is provided under the arc-shaped recess 20. Therefore, the coupling plate 22 and the adjusting tool 15 are coupled and fixed with each other by using a screw through the arc-shaped recess 20. When it is wanted to turn the temperature sensor 2 to the left and right sides, the coupling plate 22 is twisted to left or right side within a range defined by the arc-shaped recess 20 and is fixed by using the screw via the arc-shaped recess 20.

The adjusting tool 15 is formed integrally with the bracket 17. In addition, the bracket 17 has a crack 26 that is partially cut from an upper portion to a lower portion of the bracket 17 and a coupling hole 25 formed under the crack 26 so as to be coupled to a forward and backward shaft 18 and fastened by a bolt. Thus, the bracket 17 is moved through the forward and backward shaft 18 to focus the laser point of the infrared thermometer 2.

Also, the forward and backward shaft 18 is provided on a crossbar 30, and the crossbar 30 may move to left and right sides and elevate up and down directions. The movements of the crossbar 30, on which the forward and backward shaft 18 is provided, in the left and right sides and in the up and down directions will be described below.

The movements of the crossbar 30 in the left and right sides and up and down directions may be performed by horizontal recesses 31 formed in the crossbar 30 and vertical recesses 33 formed in a support bar 14. The crossbar 30 is moved in the up and down directions through the vertical recess 33 of the support bar 14, and then, the crossbar 30 is moved to the left and right sides in a horizontal direction with respect to the support bar 14. After that, the crossbar 30 is fixed by using a fixing bolt penetrating through the vertical recess 33 and the crossing recess 31.

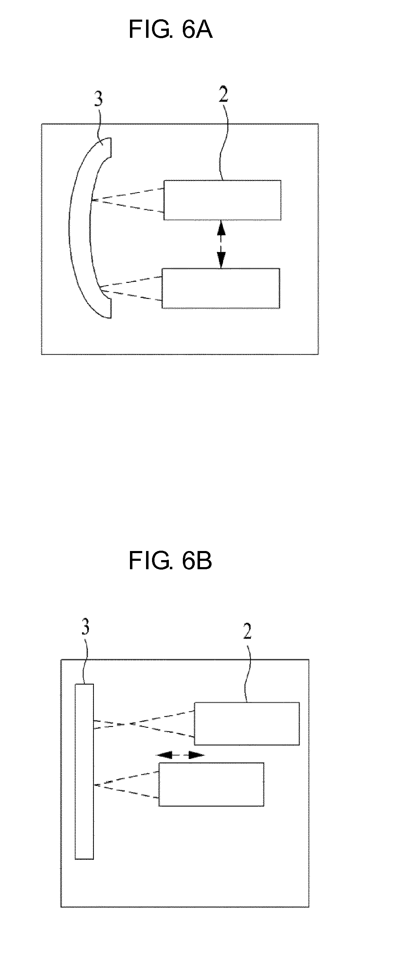

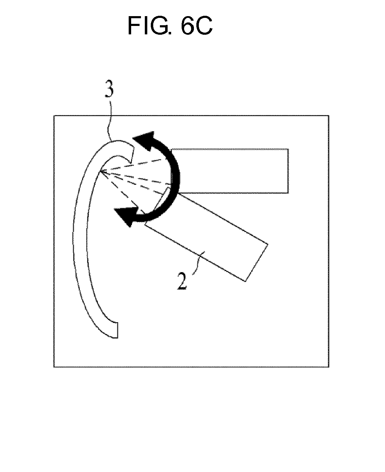

According to the above apparatus, as shown in FIGS. 6A, 6B, and 6C, the location of the infrared thermometer 2 may be freely changed to up and down directions, back and forth, and to be inclined according to a shape of the mold or the molded product, and accordingly, a temperature of the mold or the molded product may be measured accurately.

For example, when the infrared thermometer 2 is wanted to be slanted as shown in FIG. 6C, the bracket 17 is rotated at a predetermined angle with respect to the forward and backward shaft 18 and the coupling plate 22 on which the infrared thermometer 2 is provided is turned at a predetermined angle within the arc-shaped recess 22 in FIG. 1. Then, the infrared thermometer 2 may be located in an inclined position as shown in FIG. 6C.

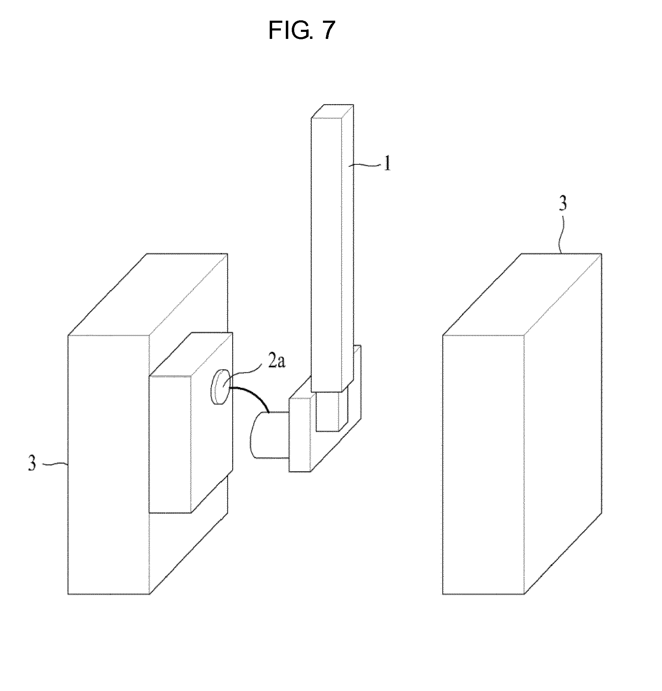

The temperature measurement performed by the temperature sensor may use the temperature sensor 2 of a non-contact type using the infrared ray, but is not limited thereto. That is, the temperature may be measured by using other types of temperature sensors. For example, FIG. 7 shows an example in which the temperature sensor 2a is a contact-type temperature sensor, not the infrared thermometer. In FIG. 7, the temperature sensor 2a directly contacts the molded product 3 to measure the temperature.

The temperature measurement may be performed with respect to the injection mold, not the molded product 3.

According to the above apparatus, the temperature sensor is provided on the robot transfer apparatus 10, and thus, there is no need to install an additional temperature measuring apparatus for measuring a temperature of the molded product. Therefore, manufacturing costs may be reduced and a time taken for measuring the temperature may be reduced, and accordingly, productivity of the apparatus may be improved.

Also, the location of the temperature sensor 2 may be changed to all directions, for example, back and forth, left and right, up and down directions, and inclined direction. Thus, the temperature of any type of mold or molded product that is a measurement target may be freely and conveniently measured. In addition, when the measured temperature exceeds the standard deviation, it is determined that the molded product is defective and separately transferred as a defect by the robot transfer apparatus 10.

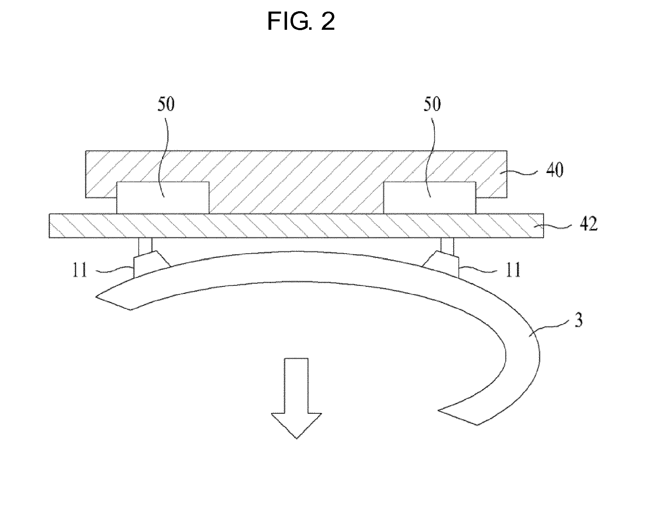

FIG. 2 is a diagram showing another example of a structure of mounting the load cell 50.

In the present embodiment, the load cells 50 are provided on left and right sides of the installation plate 40. The installation plate 40 is connected to the absorption crossbar 42, and a molded product 3 is absorbed by the absorption crossbar 42. Therefore, the weight of the molded product 3 is measured by using two load cells 50, and thus, even if the load of the molded product 3 is tilted to a side, the weight may be measured exactly.

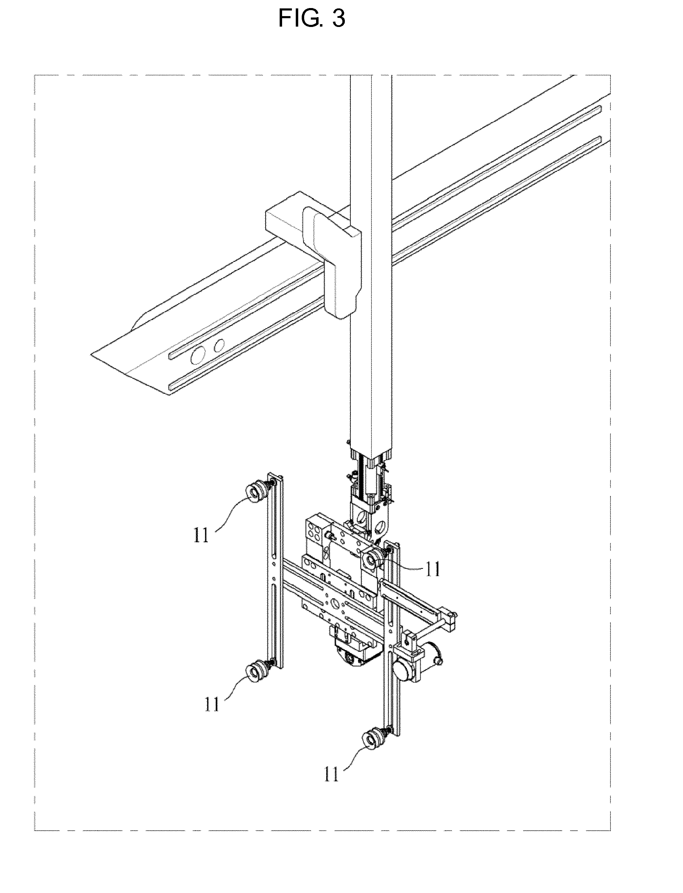

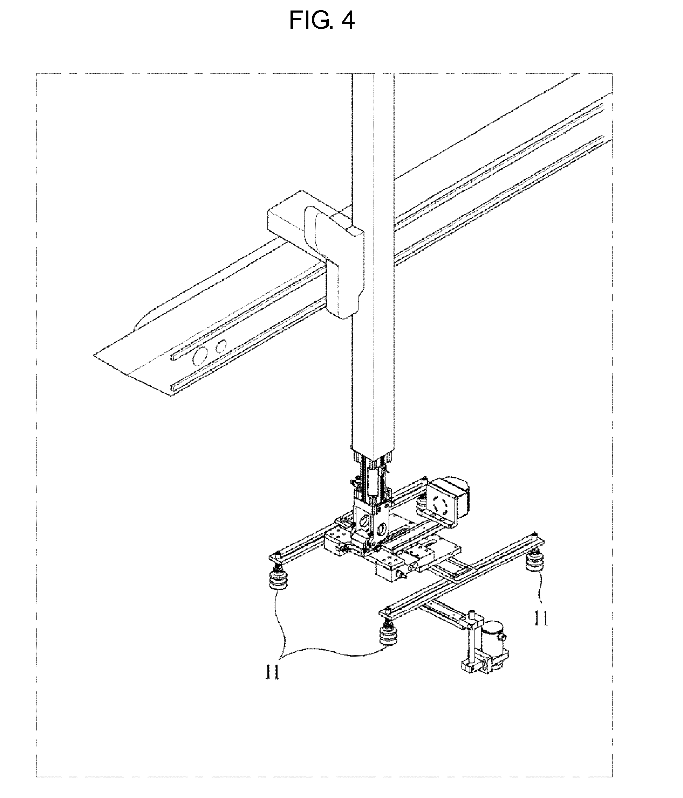

In FIG. 2, the molded product 3 is located downward and the weight is measured, and this will be described below with reference to FIGS. 3 and 4.

As shown in FIG. 3, a molded product (not shown) is absorbed by the absorption tools 11 in a state shown in FIG. 1, and then, is rotated as shown in FIG. 4 by using a rotating apparatus (including a hinge) that is mounted on a lower end of the robot arm 1. Then, the molded product 3 is located downward as shown in FIG. 2. In this state, the load cells 50 are configured to measure a load of the molded product 3. In this case, a fixing structure of the load cells 50 is different from that of FIG. 1. That is, the load cells 50 have to be provided on the installation plate 40 so that a load may be measured via a pulling force of the molded product 3, when the molded product 3 is placed on a lower portion.

According to the embodiment of FIG. 1, the weight may be measured directly in a state where the molded product is absorbed by the absorption tools 11. However, according to the embodiment of FIG. 2, the molded product is rotated downward 90-degree to be placed as shown in FIG. 2, and then, the weight of the molded product is measured.

As described above, any measurement type may be selected, but it is effective that the weight is measured directly on separating the molded product 3 from the injection mold by the absorption tools 11 absorbing the molded product 3, in consideration of processing rapidity. Then, as shown in FIG. 2, the molded product 3 may be transferred to a next process without being rotated, and thus, the number of processes may be reduced.

According to the embodiments of the present invention, the weight and the temperature of the molded product 3 may be measured during the absorption process performed by using the absorption tools 11 or a post-process, and thus, processes of detecting defective molded products by using the weight and temperature variation may be reduced and may be performed exactly, thereby improving productivity. Also, the weight measurement may be performed in a narrow space, and devices such as an additional weight measuring apparatus and a temperature measuring apparatus are not necessary. Thus, equipment costs may be greatly reduced.

FIG. 8 is a diagram showing the apparatus of FIG. 1, that is, the structure of FIG. 1 including an apparatus for measuring weight of the molded product and temperature of the mold, connected to an articulated robot 60.

As shown in FIG. 8, an entire robot transfer apparatus 10 is connected to a front edge portion 62 of a robot arm 1 in the articulated robot 60. As such, the apparatus for measuring the weight of the molded product and the apparatus for measuring the temperature of the molded product or the mold are connected to the articulated robot 60, and thus, functions of the articulated robot 60 may be improved.

Since the articulated robot 60 does not only perform the set function such as the movement of the object but also determines whether the molded product is defective by measuring the weight and the temperature, the performance of the articulated robot 60 may be further improved.

Also, there is no need to additionally install a weight measuring apparatus and a temperature measuring apparatus to perform post-processes of the forming of the molded product like in the prior art, and thus, equipment costs may be reduced, production lines may be simplified, and an equipment space may be miniaturized.

Also, according to the present invention, the weight sensor is provided in the absorption apparatus that is formed on the robot arm of the articulated robot to measure the weight of the molded product in advance on absorbing the molded product, and thus, the performance of the articulated robot may be improved, the operating processes may be reduced, and the productivity may be also greatly improved.

In addition, according to the present invention, the temperature measuring apparatus is provided in the robot arm of the articulated robot to detect a defect of the molded product according to the temperature variation, and thus, the performance of the articulated robot may be improved, the operating processes may be reduced, and the productivity may be also greatly improved.

Also, according to the present invention, additional weight measuring apparatus and temperature measuring equipment is not necessary, and thus, equipment costs may be reduced and an equipment space may be reduced.

While this invention has been particularly shown and described with reference to exemplary embodiments thereof, it will be understood by those skilled in the art that various changes in form and details may be made therein without departing from the spirit and scope of the invention as defined by the appended claims.

## Claims

1. An articulated robot comprising an absorption apparatus and a weight measuring apparatus,
wherein a robot transfer apparatus is provided on a front edge portion of a robot arm in the articulated robot, and the robot transfer apparatus comprises the absorption apparatus having absorption tools and the weight measuring apparatus provided on the absorption apparatus.

2. The articulated robot of claim 1, wherein the absorption apparatus comprises:
the absorption tools for absorbing an absorption target that is wanted to be moved;
a support bar connected to the absorption tools; and
an absorption crossbar connected to the support bar.

3. The articulated robot of claim 1, wherein the weight measuring apparatus comprises:
a frame connected to the robot arm;
an installation plate formed on the frame; and
load cells provided on the installation plate.

4. The articulated robot of claim 3, wherein the load cells are configured to measure a weight of the absorption apparatus when the absorption apparatus is placed on the load cells.

5. The articulated robot of claim 1, wherein the absorption apparatus further comprises a temperature sensor transfer apparatus for measuring a temperature of the absorption target.

6. The articulated robot of claim 5, wherein the temperature sensor transfer apparatus comprises:
the crossbar connected to the absorption apparatus;
a forward and backward shaft connected to the crossbar;
a bracket connected to the forward and backward shaft; and
a temperature sensor connected to the bracket.

7. The articulated robot of claim 1, wherein one of a mold or a molded product is absorbed by the absorption tools.
